# EUROPÄISCHE PATENTSCHRIFT

(11) **EP 1 249 666 B1**
(45) Veröffentlichungstag und Bekanntmachung des Hinweises auf die Patenterteilung: **27.10.2010**
(21) Anmeldenummer: 01130048.0
(22) Anmeldetag: 18.12.2001
(51) Int. Cl.: F24D 3/08, F24D 17/00

(54) **Heizungsanlage**
Heating system
Installation de chauffage

(30) Priorität: 12.04.2001 DE 10118343
(43) Veröffentlichungstag der Anmeldung: 16.10.2002
(73) Patentinhaber: ROBERT BOSCH GMBH, 70442 Stuttgart (DE)
(72) Erfinder: Kroell, Ulrich, 72654 Neckartenzlingen (DE)

(56) Entgegenhaltungen:
- DE-U- 29 512 134
- DE-U- 29 815 206
- FR-A- 2 444 896
- US-A- 4 363 221

## Beschreibung

Die Erfindung betrifft eine Heizungsanlage mit einem Brauchwasserspeicher, der durch einen Brauchwasserladekreis zur Erwärmung mit Warmwasser versorgt wird, wobei der Brauchwasserladekreis dem Brauchwasserspeicher im unteren Bereich kaltes Ladewasser entnimmt, über eine Brauchwasser-Ladepumpe und einen Wärmeübertrager leitet, in dem das Ladewasser erwärmt wird, und dem Brauchwasserspeicher im oberen Bereich als warmes Ladewasser wieder zuführt. Dabei ist dem Brauchwasserspeicher im oberen Bereich warmes Brauchwasser zum Verbrauch entnehmbar. Zum Auffüllen des Brauchwasserspeichers ist diesem im unteren Bereich Kaltwasser zuführbar.

Üblicherweise ist bei einer solchen Heizungsanlage der Brauchwasserspeicher als sogenannter "Schichtladespeicher" ausgebildet bzw. weist ein solcher Brauchwasserspeicher ein sogenanntes "Schichtladespeichersystem" auf. Derartige Schichtladespeicher sind als solche bekannt und müssen daher nicht näher erläutert werden. Um dem Brauchwasserspeicher warmes Brauchwasser und kaltes Ladewasser entnehmen und Kaltwasser sowie warmes Ladewasser zuführen zu können, muß der Brauchwasserspeicher mit geeigneten Anschlüssen versehen sein. Bei herkömmlichen Heizungsanlagen sind für die Entnahme des kalten Ladewassers sowie für die Zuleitung des Kaltwassers separate Leitungen an den Brauchwasserspeicher angeschlossen. Ebenso ist es üblich, für die Entnahme des Brauchwassers sowie für die Zuführung des erwärmten Ladewassers separate Leitungen an den Brauchwasserspeicher anzuschließen.

Aus DE 289 15 206 U1 ist eine Trinkwasser-Erwärmungseinrichtung bekannt, die einen Brauchwasserspeicher aufweist, der durch einen Brauchwasserladekreis erwärmt wird. Der Brauchwasserspeicher weist einen Kaltwasserzulauf auf, der an eine Kaltwasserleitung und an eine Saugleitung des Brauchwasserladekreises angeschlossen ist, die kaltes Ladewasser dem Brauchwasserspeicher im unteren Bereich entnimmt. In der Kaltwasserzuleitung ist ein Anschlussglied zum Verzweigen des Kaltwassers mit dem Kaltwasseranschluss und dem Brauchwasserladekreis angeordnet, wobei das Anschlussglied von einem Verteilerventil realisiert ist, das von einem Thermostat angesteuert wird, so dass mittels des Verteilerventils der Kaltwasseranschluss mit der Kaltwasserleitung oder mit dem Brauchwasserladekreis verbunden werden kann.

Eine weitere Trinkwasser-Erwärmungseinrichtung mit einem Schichtenspeicher zur Warmwasserbereitung gemäß dem Oberbegriff des Anspruchs 1 ist aus DE 295 12 134 U1 bekannt, bei der eine Bypass-Leitung parallel zum Schichtenspeicher geschaltet ist, die mit der Kaltwasserleitung und der Zapfleitung verbunden ist und in die eine Umwälzpumpe und ein Wärmetauscher eingeschleift ist. Die Bypass-Leitung ist dabei an ein Abzweigstück angebunden, das mit der Kaltwasserleitung und der Zapfleitung verbunden ist.

Aus US 4,363,221 ist eine Trinkwasser-Erwärmungseinrichtung mit einem Schichtenspeicher zur Warmwasserbereitung bekannt, der über einen Brauchwasserladekreis an einen Wärmeübertrager angeschlossen ist. Im Brauchwasserladekreis ist ein Umschaltventil angeordnet, das wahlweise den Brauchwasserladekreis direkt mit der Warmwasserentnahmeleitung oder mit der Warmwasserzuführleitung für den Schichtenspeicher verbindet.

Ein Anschlussglied für eine Trinkwasser-Erwärmungseinrichtung ist aus FR 2 444 896 bekannt. Mittels des Anschlussgliedes ist das in einem Kaltwasseranschluss strömende Wasser auf einen Warmwasserspeicher und auf einen Heizkreis einer Solaranlage aufteilbar.

### Vorteile der Erfindung

Die erfindungsgemäße Heizungsanlage mit den kennzeichnenden Merkmalen des Anspruchs 1 hat dem gegenüber den Vorteil, dass am Brauchwasserspeicher nur ein einziger Anschluss für darin einzuleitendes Kaltwasser und für daraus zu entnehmendes kaltes Ladewasser erforderlich ist. Der Aufwand zur Herstellung des Brauchwasserspeichers wird dadurch reduziert. Die erfindungsgemäß vorgeschlagene Ausbildung des in der Saugleitung angeordneten Anschlussgliedes als Strömungsleitmittel bewirkt, dass der Strömungswiderstand für eine Strömung vom Kaltwasseranschluss zum Speicheranschluss kleiner als für eine Strömung vom Kaltwasseranschluss zum Pumpenanschluss ist. Dementsprechend wird beim Entnehmen von Brauchwasser das nachfließende Kaltwasser bei inaktivem Brauchwasserladekreis vorrangig zum Speicheranschluss und somit zum Brauchwasserspeicher fließen. Dadurch, dass eine Strömung des Kaltwassers zum Wärmeübertrager bei inaktivem Brauchwasserladekreis behindert oder verhindert und bei aktivem Brauchwasserladekreis ermöglicht wird, wird sichergestellt, dass bei einer Entnahme von Brauchwasser kein kaltes Wasser durch den Wärmeübertrager in den oberen Bereich des Brauchwasserspeichers gelangt, wenn der Brauchwasserladekreis inaktiv ist, also wenn der Wärmeübertrager das ihn durchströmende kalte Wasser nicht oder nicht ausreichend erwärmen kann. Die ordnungsgemäße Funktion des Brauchwasserspeichers kann dadurch gewährleistet werden. Darüber hinaus ergibt sich durch die Ankopplung der Kaltwasserleitung an die Saugleitung in Verbindung mit den Strömungsleitmitteln eine Wirkungsgradsteigerung der gesamten Heizungsanlage, da bei aktivem Brauchwasserladekreis im Falle einer Brauchwasserentnahme anstelle von kaltem Ladewasser aus dem Brauchwasserspeicher eine entsprechende Menge an Kaltwasser dem Wärmeübertrager zugeführt wird. Da das Kaltwasser üblicherweise kälter ist als das kalte Ladewasser, kann der Wärmeübertrager mit einem höheren Wirkungsgrad arbeiten, wodurch sich insgesamt der Wirkungsgrad der Heizungsanlage verbessert.

Bei einer zweckmäßigen Ausführungsform können die genannten Strömungsleitmittel dadurch gebildet sein, dass die Brauchwasser-Ladepumpe bei inaktivem Brauchwasser-Ladekreis sperrt. Das bedeutet, dass die nicht arbeitende Brauchwasser-Ladepumpe eine Durchströmung zumindest in Richtung Wärmeübertrager nicht zulässt. Nur bei aktivem Brauchwasserladekreis bzw. bei aktiver oder arbeitender Brauchwasser-Ladepumpe wird Wasser zum Wärmeübertrager durch die Brauchwasser-Ladepumpe gefördert.

Alternativ oder zusätzlich können die Strömungsleitmittel einen Rückflussverhinderer (z.B. ein federbelastetes Rückschlagventil) aufweisen, der stromauf des Wärmeübertragers und stromab des Anschlusses der Kaltwasserleitung an die Saugleitung angeordnet ist.

Bei einer zweckmäßigen Weiterbildung kann das Anschlussglied zwischen Pumpenanschluss und Speicheranschluss eine Drosselstelle enthalten, wobei dann der Kaltwasseranschluss auf der vom Pumpenanschluss abgewandten Seite dieser Drosselstelle mit dem Speicheranschluss kommuniziert. Auch diese Maßnahme bewirkt, dass der Strömungswiderstand bei einer Strömung vom Kaltwasseranschluss zum Pumpenanschluss größer ist als bei einer Strömung vom Kaltwasseranschluss zum Speicheranschluss, wodurch eine unzulässige Durchströmung des Wärmeübertragers mit Kaltwasser behindert wird.

Bei einer besonders zweckmäßigen Weiterbildung sind in dem oberen Bereich des Brauchwasserspeichers eine Brauchwasserleitung zur Entnahme des warmen Brauchwassers und eine dazu separate Rückführungsleitung des Brauchwasserladekreises zur Zuführung des warmen Ladewassers an den Brauchwasserspeicher angeschlossen, wobei die Rückführungsleitung im Brauchwasserspeicher unterhalb der Brauchwasserleitung mündet. Durch die Einleitung des erwärmten Ladewassers auf einem Niveau, das sich unterhalb der Entnahmestelle des warmen Brauchwassers befindet, wird im Brauchwasserspeicher zwischen den Mündungen von Brauchwasserleitung und Rückführungsleitung ein relativ kleines Wasservolumen ausgebildet, das sich zur Dämpfung von Temperaturschwankungen eignet, die beim Beheizen des Wärmeübertragers auftreten können. Diese Maßnahme reduziert somit Temperaturschwankungen im entnommenen Brauchwasser und verbessert folglich den Komfort der Heizungsanlage.

Weitere wichtige Merkmale und Vorteile der erfindungsgemäßen Heizungsanlage ergeben sich aus den Unteransprüchen, aus den Zeichnungen und aus der zugehörigen Figurenbeschreibung anhand der Zeichnungen.

### Zeichnungen

Ein Ausführungsbeispiel der erfindungsgemäßen Heizungsanlage ist in den Zeichnungen dargestellt und wird im folgenden näher erläutert. Es zeigen, jeweils schematisch
- Fig. 1: eine schaltplanartige Darstellung einer erfindungsgemäßen Heizungsanlage beim Entnehmen von Brauchwasser bei aktivem Brauchwasserladekreis,
- Fig. 2: eine Ansicht wie in Fig. 1, jedoch bei inaktivem Brauchwasserladekreis,
- Fig. 3: eine Schnittdarstellung eines Anschlußgliedes, das bei der erfindungsgemäßen Heizungsanlage zum Anschluß einer Kaltwasserleitung an eine Saugleitung dient.

### Beschreibung des Ausführungsbeispiels

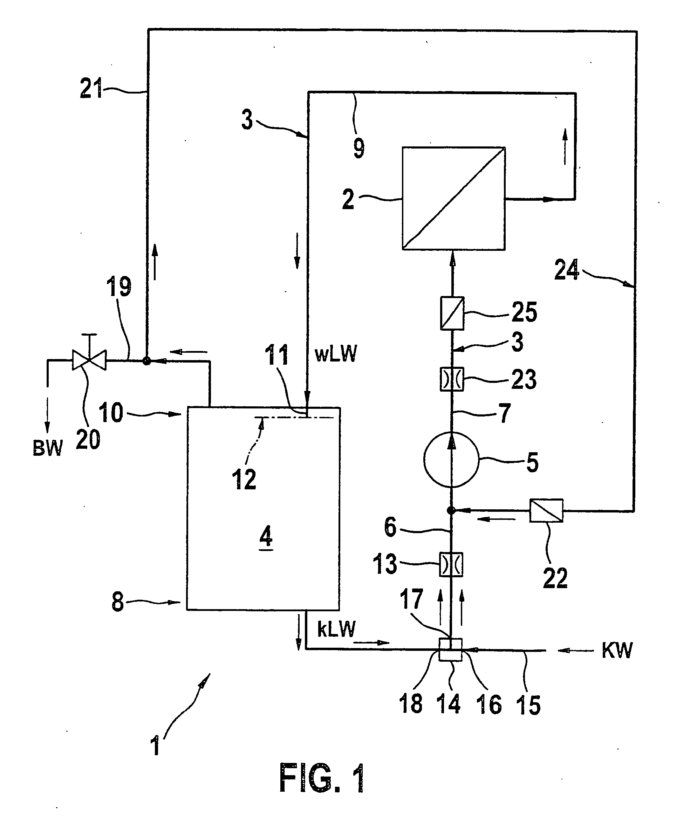

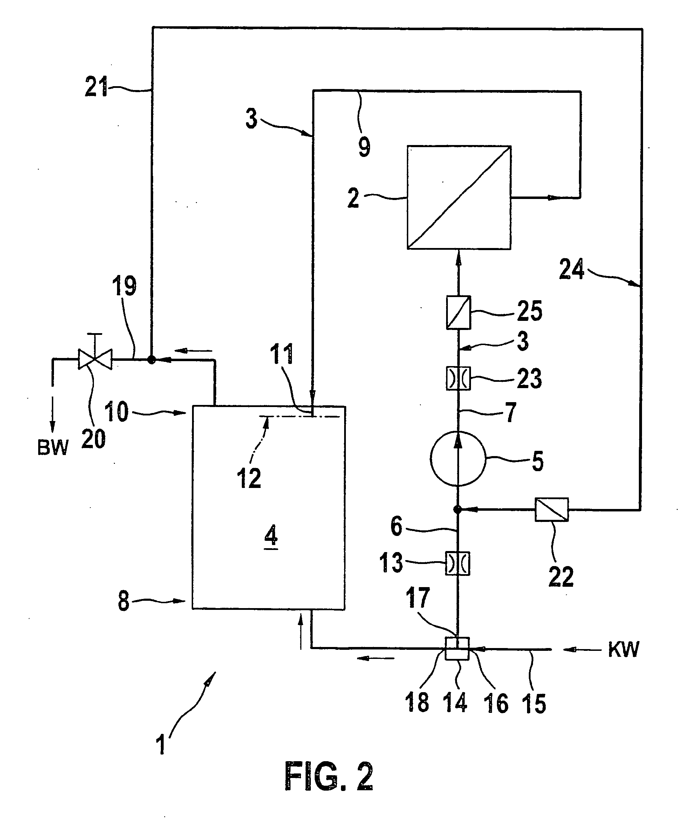

Entsprechend den Fig. 1 und 2 besitzt eine erfindungsgemäße Heizungsanlage 1 einen Wärmeübertrager 2, dem von einem nicht dargestellten Wärmeerzeuger, z.B. eine Gastherme, Wärme zugeführt wird. Mit Hilfe dieses Wärmeübertragers 2 wird einem daran angeschlossenen Brauchwasserladekreis 3 Wärme zugeführt. Dieser Brauchwasserladekreis 3 dient zum Aufheizen eines Brauchwasserspeichers 4, der vorzugsweise nach Art eines Schichtladespeichersystems ausgebildet ist.

Der Brauchwasserladekreis 3 weist eine Brauchwasser-Ladepumpe 5 auf, deren Saugseite an eine Saugleitung 6 und deren Druckseite an eine Druckleitung 7 angeschlossen ist. Die Saugleitung 6 ist in einem unteren Bereich 8 des Brauchwasserspeichers 4 an diesen angeschlossen. Die Druckleitung 7 verbindet die Brauchwasser-Ladepumpe 5 mit dem Wärmeübertrager 2. Eine Rückführungsleitung 9 des Brauchwasserladekreises 3 verbindet den Wärmeübertrager 2 mit einem oberen Bereich 10 des Brauchwasserspeichers 4. Dabei ragt ein Mündungsende 11 der Rückführungsleitung 9 im oberen Bereich 10 bis zu einem Niveau 12 in den Brauchwasserspeicher 4 hinein.

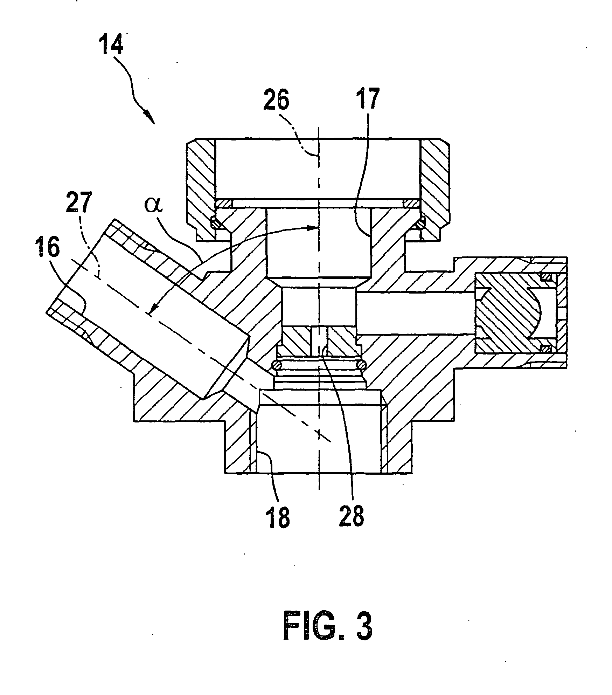

In der Saugleitung 6 ist ein Lade-Wassermengenbegrenzer 13 angeordnet, der auf eine vorgebbare Lade-Wassermenge eingestellt bzw. einstellbar ist. Stromauf des Lade-Wassermengenbegrenzers 13 enthält die Saugleitung 6 ein Anschlußglied 14, über das eine Kaltwasserleitung 15 an die Saugleitung 6 angeschlossen ist, mit welcher der Saugleitung 6 Kaltwasser KW zugeführt werden kann. Zu diesem Zweck weist das Anschlußglied 14 drei Anschlüsse auf, nämlich einen der Kaltwasserleitung 15 zugeordneten Kaltwasseranschluß 16, einen der Brauchwasser-Ladepumpe 5 zugeordneten Pumpenanschluß 17 sowie einen dem Brauchwasserspeicher 4 zugeordneten Speicheranschluß 18. Eine besondere Ausführungsform dieses Anschlußgliedes 14 ist weiter unten mit Bezug auf Fig. 3 näher erläutert.

Im oberen Bereich 10 ist an den Brauchwasserspeicher 4 außerdem eine Brauchwasserleitung 19 angeschlossen, durch die dem Brauchwasserspeicher 4 warmes Brauchwasser BW entnommen und wenigstens einer Zapfstelle 20 zugeführt werden kann. Die Brauchwasserleitung 19 mündet im oberen Bereich 10 des Brauchwasserspeichers 4 oberhalb des Niveaus 12, also oberhalb der Rückführungsleitung 9 bzw. oberhalb des Mündungsendes 11. Vorzugsweise mündet die Brauchwasserleitung 19 an der höchsten Stelle im Brauchwasserspeicher 4.

Stromauf der (ersten) Zapfstelle 20 zweigt von der Brauchwasserleitung 19 eine Zirkulationsleitung 21 ab, die über einen Rückflußverhinderer 22 an die Saugleitung 6 stromauf des Lade-Wassermengenbegrenzers 13 angeschlossen ist. In der Druckleitung 7 ist ein Gesamt-Wassermengenbegrenzer 23 angeordnet, der auf eine vorgebbare maximale Durchflußmenge eingestellt bzw. einstellbar ist, die somit eine Summe aus Lade-Wassermenge und Zirkulatiöns-Wassermenge festlegt. Durch diese besondere Bauform dient die Brauchwasser-Ladepumpe 5 gleichzeitig als Zirkulationspumpe für einen so gebildeten Zirkulationskreis 24. Ein derartiger Zirkulationskreis 24 erhöht bei einem als Schichtladespeicher ausgebildeten Brauchwasserspeicher 4 den Komfort, da mit Hilfe des Zirkulationskreises 24 das warme Wasser des Brauchwasserspeichers 4 umgewälzt werden kann.

Stromab des Gesamt-Wassermengenbegrenzers 23 ist in der Druckleitung 7 außerdem ein weiterer Rückflußverhinderer 25 angeordnet. Die Rückflußverhinderer 22 und 25 können beispielsweise als federbelastete Rückschlagventile ausgebildet sein.

### Die erfindungsgemäße Heizungsanlage 1 arbeitet wie folgt:

Zur Erwärmung des im Brauchwasserspeicher 4 gespeicherten Wassers wird der Brauchwasserladekreis 3 aktiviert; dementsprechend arbeitet die Brauchwasser-Ladepumpe 5. Dadurch wird dem Brauchwasserspeicher 4 im unteren Bereich 8 über die Saugleitung 6 kaltes Ladewasser kLW entnommen und über die Druckleitung 7 dem Wärmeübertrager 2 zugeführt. Bei aktivem Brauchwasserladekreis 3 wird dem Wärmeübertrager 2 Wärme zugeführt, die dieser an das ihn durchströmende Ladewasser übertragen kann. Auf diese Weise wird warmes Ladewasser wLW über die Rückführungsleitung 9 dem oberen Bereich 10 des Brauchwasserspeichers 4 zugeführt. Dadurch wird die im Brauchwasserspeicher 4 gespeicherte Wassermenge allmählich erwärmt. Sofern ein Zirkulationskreis 24 vorhanden ist, wird dabei gleichzeitig das warme Brauchwasser im oberen Bereich 10 des Brauchwasserspeichers 4 umgewälzt.

Solange dem Brauchwasserspeicher 4 kein Brauchwasser BW über die Brauchwasserleitung 19 entnommen wird, wird dem gesamten System auch kein frisches Kaltwasser KW zugeführt. Sobald jedoch über die Zapfstelle 20 Brauchwasser BW entnommen wird, fließt eine entsprechende Menge an Kaltwasser KW über die Kaltwasserleitung 15 nach. Bei arbeitender Brauchwasser-Ladepumpe 5 fließt dabei zumindest ein Teil des zugeführten Kaltwassers KW zur Saugseite der Brauchwasser-Ladepumpe 5, das heißt, das frisch zugeführte Kaltwasser KW bildet zumindest einen Teil der von der Brauchwasser-Ladepumpe 5 angesaugten Lade-Wassermenge. Da das frische Kaltwasser üblicherweise kälter ist als das im unteren Bereich 8 aus dem Brauchwasserspeicher 4 entnehmbare kalte Ladewasser kLW, kann der Wärmeübertrager 2 mit einem höheren Wirkungsgrad arbeiten, wodurch sich der Gesamtwirkungsgrad der Heizungsanlage 1 verbessert.

Wenn bei einer Entnahme von Brauchwasser BW der Brauchwasserladekreis 3 inaktiv ist, also wenn die Brauchwasser-Ladepumpe 5 stillsteht, strömt das nachfließende Kaltwasser KW entsprechend Fig. 2 über einen Teil der Saugleitung 6 in den unteren Bereich 8 des Brauchwasserspeichers 4. Bei inaktivem Brauchwasserladekreis 3 muß verhindert werden, daß das zum Ausgleich von entnommenem Brauchwasser BW nachfließende Kaltwasser KW über den Wärmeübertrager 2 in den oberen Bereich 10 des Brauchwasserspeichers 4 gelangt. Um solche Fehlströmungen des frischen Kaltwassers KW zu verhindern, weist die erfindungsgemäße Heizungsanlage 1 Strömungsleitmittel auf, die einerseits bei inaktivem Brauchwasserladekreis 3 eine Strömung des Kaltwassers KW zum Wärmeübertrager 2 behindern oder verhindern und andererseits bei aktivem Brauchwasserladekreis 3 eine Strömung des Kaltwassers KW zum Wärmeübertrager 2 ermöglichen. Die Druckleitung 7 enthält hier den Rückflußverhinderer 25, der als solches Strömungsleitmittel dient. Alternativ oder zusätzlich kann auch die Brauchwasser-Ladepumpe 5 so ausgestaltet sein, daß sie im Stillstand eine Durchströmung zumindest von ihrer Saugseite zu ihrer Druckseite sperrt.

Eine Besonderheit der Ausführungsform gemäß den Fig. 1 und 2 ist auch darin zu sehen, daß die Rückführungsleitung 9 unterhalb der Brauchwasserleitung 19 im oberen Bereich 10 des Brauchwasserspeichers 4 mündet. Denn im Betrieb des Brauchwasserladekreises 3 kann es durch Temperaturschwankungen am Wärmeübertrager 2 ebenfalls zu Temperaturschwankungen im warmen Ladewasser wLW kommen. Durch die erfindungsgemäße Anordnung der Mündungsenden von Rückführungsleitung 9 und Brauchwasserleitung 19 bildet sich oberhalb des Niveaus 12 ein Wasservolumen, das die genannten Temperaturschwankungen ausgleicht bzw. glättet. Dementsprechend bleibt das über die Brauchwasserleitung 19 entnommene Brauchwasser BW trotz Temperaturschwankungen im Wärmeübertrager 2 hinsichtlich seiner Temperatur vergleichsweise konstant.

Ein Anschlußglied 14 gemäß Anspruch 1 ist in Fig. 3 in einer Schnittdarstellung wiedergegeben. Bei diesem Anschlußglied sind der oben gezeigte Pumpenanschluß 17 und der unten gezeigte Speicheranschluß 18 im Anschlußglied 14 koaxial zueinander ausgerichtet, während der seitlich angeordnete Kaltwasseranschluß 16 geneigt zu einer Längsachse 26 von Pumpenanschluß 17 und Speicheranschluß 18 orientiert ist. Die Orientierung des Kaltwasseranschlusses 17 ist dabei so gewählt, daß sich zwischen einer Längsachse 27 des Kaltwasseranschlusses 16 und der Längsachse 26 auf einer vom Speicheranschluß 18 abgewandten Seite ein spitzer Winkel α ausbildet. Durch diese Bauweise ist der Kaltwasseranschluß 16 so orientiert, daß im Anschlußglied 14 eine Strömungsumlenkung bei einer Strömung vom Kaltwasseranschluß 16 zum Speicheranschluß 18 kleiner ist als bei einer Strömung vom Kaltwasseranschluß 16 zum Pumpenanschluß 17. Das heißt, das über den Kaltwasseranschluß 16 in das Anschlußglied 14 eingeleitete Kaltwasser KW ist so orientiert, daß es leichter über den Speicheranschluß 18 zum Brauchwasserspeicher 4 strömt als über den Pumpenanschluß 17 zur Brauchwasser-Ladepumpe 5. Somit kann das Anschlußglied 14 durch seine besondere Bauweise ebenfalls als Strömungsleitmittel dienen.

Das in Fig. 3 gezeigte Anschlußglied 14 enthält zwischen dem Pumpenanschluß 17 und dem Speicheranschluß 18 eine Drosselstelle 28. Dabei ist beachtenswert, daß der Kaltwasseranschluß 16 auf der vom Pumpenanschluß 17 abgewandten Seite der Drosselstelle 28 in den Speicheranschluß 18 einmündet. Der durch die Drosselstelle 28 gebildete Strömungswiderstand behindert somit eine unerwünschte selbsttätige Strömung des Kaltwassers KW vom Kaltwasseranschluß 16 zum Pumpenanschluß 17 bei inaktivem Brauchwasserladekreis 3.

Bei einer Ausführungsform der Heizungsanlage 1, die mit dem Zirkulationskreis 24 ausgestattet ist, kann diese Drosselstelle 28 auch so dimensioniert sein, daß sie den Lade-Wassermengenbegrenzer 13 bildet.

### Bezugszeichenliste

- 1: Heizungsanlage
- 2: Wärmeübertrager
- 3: Brauchwasserladekreis
- 4: Brauchwasserspeicher
- 5: Brauchwasser-Ladepumpe
- 6: Saugleitung
- 7: Druckleitung
- 8: unterer Bereich von 4
- 9: Rückführungsleitung
- 10: oberer Bereich von 4
- 11: Mündungsende von 9
- 12: Niveau
- 13: Lade-Wassermengenbegrenzer
- 14: Anschlußglied
- 15: Kaltwasserleitung
- 16: Kaltwasseranschluß
- 17: Pumpenanschluß
- 18: Speicheranschluß
- 19: Brauchwasserleitung
- 20: Zapfstelle
- 21: Zirkulationsleitung
- 22: Rückflußverhinderer
- 23: Gesamt-Wassermengenbegrenzer
- 24: Zirkulationskreis
- 25: Rückflußverhinderer
- 26: Längsachse von 17, 18
- 27: Längsachse von 16
- 28: Drosselstelle

- α: Winkel zwischen 26 und 27

## Patentansprüche

1. Heizungsanlage mit einem Brauchwasserspeicher (4), der durch einen Brauchwasserladekreis (3) erwärmt wird,
- wobei der Brauchwasserladekreis (3) dem Brauchwasserspeicher (4) im unteren Bereich (8) kaltes Ladewasser (kLW) entnimmt, über eine Brauchwasser-Ladepumpe (5) und einen Wärmeübertrager (2) leitet, in dem es erwärmt wird, und dem Brauchwasserspeicher (4) im oberen Bereich (10) als warmes Ladewasser (wLW) wieder zuführt,
- wobei dem Brauchwasserspeicher (4) im oberen Bereich (10) warmes Brauchwasser (BW) zum Verbrauch entnehmbar ist,
- wobei zum Auffüllen des Brauchwasserspeichers (4) diesem im unteren Bereich (8) Kaltwasser (KW) zuführbar ist,
- wobei eine das Kaltwasser (KW) zuführende Kaltwasserleitung (15) an eine Saugleitung (6) der Brauchwasser-Ladepumpe (5) angeschlossen ist, die das kalte Ladewasser (kLW) dem Brauchwasserspeicher (4) im unteren Bereich (8) entnimmt,
- wobei Strömungsleitmittel (5, 13, 14, 25, 28) vorgesehen sind, die eine Strömung des Kaltwassers (KW) von der Kaltwasserleitung (15) zum Wärmeübertrager (2) bei inaktivem Brauchwasserladekreis (3) behindern oder verhindern und bei aktivem Brauchwasserladekreis (3) ermöglichen.
**dadurch gekennzeichnet, dass** die Saugleitung (6) ein Anschlussglied (14) aufweist, an das die Kaltwasserleitung (15) angeschlossen ist, wobei ein der Kaltwasserleitung (15) zugeordneter Kaltwasseranschluss (16) des Anschlussglieds (14) gegenüber einem dem Brauchwasserspeicher (4) zugeordneten Speicheranschluss (18) des Anschlussglieds (14) und einem der Brauchwasser-Ladepumpe (5) zugeordneten Pumpenanschluss (17) des Anschlussglieds (14) so orientiert ist,
dass sich zwischen einer Längsachse (27) des Kaltwasseranschlusses (16) und der Längsachse (26) auf einer vom Speicheranschluss (18) abgewandten Seite ein spitzer Winkel ausbildet, wobei im Anschlussglied (14) eine Strömungsumlenkung bei einer Strömung vom Kaltwasseranschluss (16) zum Speicheranschluss (18) kleiner ist als bei einer Strömung vom Kaltwasseranschluss (16) zum Pumpenanschluss (17).

2. Heizungsanlage nach Anspruch 1, **dadurch gekennzeichnet, dass** die Kaltwasserleitung (15) stromauf eines Lade-Wassermengenbegrenzers (13, 28) an die Saugleitung (6) angeschlossen ist.

3. Heizungsanlage nach Anspruch 1 oder 2, **dadurch gekennzeichnet, dass** die Strömungsleitmittel dadurch gebildet sind, dass die Brauchwasser-Ladepumpe (5) bei inaktivem Brauchwasserladekreis (3) sperrt.

4. Heizungsanlage nach einem der Ansprüche 1 bis 3, **dadurch gekennzeichnet, dass** die Strömungsleitmittel einen Rückflussverhinderer (25) aufweisen, der stromauf des Wärmeübertragers (2) und stromab des Anschlusses der Kaltwasserleitung (15) an die Saugleitung (6) angeordnet ist.

5. Heizungsanlage nach Anspruch 1, **dadurch gekennzeichnet, dass** das Anschlussglied (14) zwischen Pumpenanschluss (17) und Speicheranschluss (18) eine Drosselstelle (28) enthält, wobei der Kaltwasseranschluss (16) auf der vom Pumpenanschluss (17) abgewandten Seite der Drosselstelle (28) mit dem Speicheranschluss (18) kommuniziert.

6. Heizungsanlage nach Anspruch 5, **dadurch gekennzeichnet, dass** die Drosselstelle (28) den Lade-Wassermengenbegrenzer (13) oder einen Bestandteil davon bildet.

7. Heizungsanlage nach Anspruch 1, **dadurch gekennzeichnet, dass** im oberen Bereich (10) des Brauchwasserspeichers (4) eine Brauchwasserleitung (19) zur Entnahme des warmen Brauchwassers (BW) sowie eine dazu separate Rückführungsleitung (9) des Brauchwasserladekreises (3) zur Zuführung des warmen Ladewassers (wLW) an den Brauchwasserspeicher (4) angeschlossen sind, wobei die Rückführungsleitung (9) im Brauchwasserspeicher (4) unterhalb der Brauchwasserleitung (19) mündet.

8. Heizungsanlage nach Anspruch 7, **dadurch gekennzeichnet, dass** die Brauchwasserleitung (19) im Brauchwasserspeicher (4) an der höchsten Stelle mündet.

9. Heizungsanlage nach Anspruch 7, **dadurch gekennzeichnet, dass** im oberen Bereich (10) des Brauchwasserspeichers (4) eine Brauchwasserleitung (19) zur Entnahme des warmen Brauchwassers (BW) an den Brauchwasserspeicher (4) angeschlossen ist, die das Brauchwasser (BW) zumindest zu einer Zapfstelle (20) leitet, wobei stromauf der Zapfstelle(n) (20) eine Zirkulationsleitung (21) von der Brauchwasserleitung (19) abzweigt, die einen Rückflussverhinderer (22) enthält und die stromauf der Brauchwasser-Ladepumpe (5) sowie stromab eines Lade-Wassermengenbegrenzers (13) an die Saugleitung (6) angeschlossen ist.

10. Heizungsanlage nach Anspruch 9, **dadurch gekennzeichnet, dass** in einer Druckleitung (7) der Brauchwasser-Ladepumpe (5) stromauf des Wärmeübertragers (2) ein Gesamt-Wassermengenbegrenzer (23) angeordnet ist.

## Claims

1. A heating system comprising a domestic water storage tank (4) which is heated by a domestic water charging circuit (3),
- wherein the domestic water charging circuit (3) withdraws cold water (kLW) from the domestic water storage tank (4) in the lower region (8), passes it via a domestic water charging pump (5) and a heat exchanger (2) in which it is heated, and supplies it back to the domestic water storage tank (4) in the upper region (10) as hot charging water (wLW),
- wherein hot domestic water (BW) for consumption can be withdrawn from the domestic water storage tank (4) in the upper region (10),
- wherein for filling the domestic water storage tank (4) cold water (KW) can be supplied to said storage tank in the lower region (8),
- wherein a cold water pipe (15) supplying the cold water (KW) is connected to a suction line (6) of the domestic water charging pump (5) which withdraws the cold charging water (kLW) from the domestic water storage tank (4) in the lower region (8),
- wherein flow guiding means (5, 13, 14, 25, 28) are provided which impede or prevent any flow of cold water (KW) from the cold water pipe (15) to the heat exchanger (2) when the domestic water charging circuit (3) is inactive and enable flow when the domestic water charging circuit (3) is active,
**characterised in that** the suction line (6) has a connection member (14) to which the cold water pipe (15) is connected, wherein a cold water connection (16) of the connection member (14) associated with the cold water pipe (15) is oriented with respect to a storage tank connection (18) of the connection member (14) associated with the domestic water storage tank (4) and a pump connection (17) of the connection member (14) associated with the domestic water charging pump (5) in such a manner that an acute angle is formed between a longitudinal axis (27) of the cold water connection (16) and the longitudinal axis (26) on a side facing away from the storage tank connection (18), wherein in the connection member (14) a flow deflection in the case of a flow from the cold water connection (16) to the storage tank connection (18) is smaller than that in the case of a flow from the cold water connection (16) to the pump connection (17).

2. The heating system according to claim 1, **characterised in that** the cold water pipe (15) is connected to the suction line (6) upstream of a charging water limiter (13, 28).

3. The heating system according to claim 1 or 2, **characterised in that** the flow guiding means are formed by the domestic water charging pump (5) being blocked when the domestic water charging circuit (3) is inactive.

4. The heating system according to any one of claims 1 to 3, **characterised in that** the flow guiding means have a backflow preventer (25) which is located upstream of the heat exchanger (2) and downstream of the connection of the cold water pipe (15) to the suction line (6).

5. The heating system according to claim 1, **characterised in that** the connection member (14) between pump connection (17) and storage tank connection (18) contains a restriction point (28), wherein the cold water connection (16) on the side of the restriction point (28) facing away from the pump connection (17) communicates with the storage tank connection (18).

6. The heating system according to claim 5, **characterised in that** the restriction point (28) forms the charging water limiter (13) or a component part thereof.

7. The heating system according to claim 1, **characterised in that** a domestic water pipe (19) for withdrawing the hot domestic water (BW) and a return pipe (9) of the domestic water charging circuit (3) separate therefrom for supplying hot charging water (wLW) to the domestic water storage tank (4) are connected in the upper region (10) of the domestic water storage tank (4), wherein the return pipe (9) opens into the domestic water storage tank (4) below the domestic water pipe (19) .

8. The heating system according to claim 7, **characterised in that** the domestic water pipe (19) opens into the domestic water storage tank (4) at the highest point.

9. The heating system according to claim 7, **characterised in that** a domestic water pipe (19) for withdrawing the hot domestic water (BW) is connected to the domestic water storage tank (4) in the upper region (10) of the domestic water storage tank (4), which pipe supplies the domestic water (BW) at least to a tapping point (20), wherein a circulating pipe (21) branches off from the domestic water pipe (19) upstream of the tapping point(s) (20), which circulating pipe contains a backflow preventer (22) and is connected to the suction line (6) upstream of the domestic water charging pump (5) and downstream of a charging water limiter (13).

10. The heating system according to claim 9, **characterised in that** a total water limiter (23) is located in a pressure line (7) of the domestic water charging pump (5) upstream of the heat exchanger (2).

## Revendications

1. Installation de chauffage avec un réservoir d'eau industrielle (4), qui est réchauffé par un circuit de charge d'eau industrielle (3),
- le circuit de charge d'eau industrielle (3) prélevant de l'eau de charge (kLW) froide sur le réservoir d'eau industrielle (4) dans la zone (8) inférieure, l'acheminant par une pompe de charge pour eau industrielle (5) et d'un échangeur de chaleur (2), dans lequel elle est réchauffée, et la ramenant au réservoir d'eau industrielle (4) dans la zone (10) supérieure sous forme d'eau de charge (wLW) chaude,
- de l'eau industrielle (BW) chaude pouvant être prélevée pour la consommation sur le réservoir d'eau industrielle (4) dans la zone (10) supérieure,
- de l'eau froide (KW) pouvant être amenée, pour le remplissage du réservoir d'eau industrielle (4), à celui-ci dans la zone (8) inférieure,
- une conduite d'eau froide (15) amenant l'eau froide (kW) étant raccordée à une conduite d'admission (6) de la pompe de charge d'eau industrielle (5) qui prélève l'eau de charge (kLW) froide sur le réservoir d'eau industrielle (4) dans la zone (8) inférieure,
- des moyens de guidage d'écoulement (5, 13, 14, 25, 28) étant prévus, lesquels gênent ou empêchent un écoulement de l'eau froide (KW) depuis la conduite d'eau froide (15) à l'échangeur de chaleur (2) lorsque le circuit de charge d'eau industrielle (3) est inactif et le permette lorsque le circuit de charge d'eau industrielle (3) est actif,
**caractérisée en ce que** la conduite d'admission (6) présente un élément de branchement (14) auquel la conduite d'eau froide (15) est raccordée, un branchement d'eau froide (15), attribué à la conduite d'eau froide (16), de l'élément de branchement (14) étant orienté par rapport à un branchement de réservoir (18), attribué au réservoir d'eau industrielle (4), de l'élément de branchement (14) et par rapport à un branchement de pompe (17), attribué à la pompe de charge d'eau industrielle (5), de l'élément de branchement (14), de telle sorte qu'un angle aigu se forme entre un axe longitudinal (27) du branchement d'eau froide (16) et l'axe longitudinal (26) sur un côté opposé au branchement de réservoir (18), une déviation d'écoulement dans l'élément de branchement (14) avec un écoulement allant du branchement d'eau froide (16) au branchement de réservoir (18) étant plus faible qu'avec un écoulement allant du branchement d'eau froide (16) au branchement de pompe (17).

2. Installation de chauffage selon la revendication 1, **caractérisée en ce que** la conduite d'eau froide (15) est raccordée en amont d'un limiteur de quantité d'eau de charge (13, 28) à la conduite d'admission (6).

3. Installation de chauffage selon la revendication 1 ou 2, **caractérisée en ce que** les moyens de guidage d'écoulement sont formés par le fait que la pompe de charge d'eau industrielle (5) se ferme lorsque le circuit de charge d'eau industrielle (3) est inactif.

4. Installation de chauffage selon l'une quelconque des revendications 1 à 3, **caractérisée en ce que** les moyens de guidage d'écoulement présentent un dispositif antireflux (25) qui est disposé en amont de l'échangeur de chaleur (2) et en aval du branchement de la conduite d'eau froide (15) sur la conduite d'admission (6).

5. Installation de chauffage selon la revendication 1, **caractérisée en ce que** l'élément de branchement (14) contient un point d'étranglement (28) entre le branchement de pompe (17) et le branchement de réservoir (18), le branchement d'eau froide (16) communiquant avec le branchement de réservoir (18) sur le côté, opposé au branchement de pompe (17), du point d'étranglement (28).

6. Installation de chauffage selon la revendication 5, **caractérisée en ce que** le point d'étranglement (28) forme le limiteur de quantité d'eau de charge (13) ou un composant de celui-ci.

7. Installation de chauffage selon la revendication 1, **caractérisée en ce que**, dans la zone supérieure (10) du réservoir d'eau industrielle (4), une conduite d'eau industrielle (19) pour le prélèvement de l'eau industrielle (BW) chaude et une conduite de recyclage (9), séparée de la première conduite, du circuit de charge d'eau industrielle (3) pour l'arrivée de l'eau de charge chaude (wLW) sont raccordées au réservoir d'eau industrielle (4), la conduite de recyclage (9) débouchant dans le réservoir d'eau industrielle (4) au-dessous de la conduite d'eau industrielle (19).

8. Installation de chauffage selon la revendication 7, **caractérisée en ce que** la conduite d'eau industrielle (19) débouche au point le plus élevé dans le réservoir d'eau industrielle (4).

9. Installation de chauffage selon la revendication 7, **caractérisée en ce que**, dans la zone supérieure (10) de l'accumulateur d'eau industrielle (4), une conduite d'eau industrielle (19) pour le prélèvement de l'eau industrielle (BW) chaude est raccordée au réservoir d'eau industrielle (4), laquelle conduite dirige l'eau industrielle (BW) au moins vers un point de prélèvement (20), une conduite de circulation (21) déviant de la conduite d'eau industrielle (19) en amont du (des) point(s) de prélèvement (20), laquelle conduite contient un dispositif antireflux (22) et est raccordée à la conduite d'admission (6) en amont de la pompe de charge d'eau industrielle (5) et en aval d'un limiteur de quantité d'eau de charge (13).

10. Installation de chauffage selon la revendication 9, **caractérisée en ce qu'**un limiteur de quantité d'eau globale (23) est disposé dans une conduite de pression (7) de la pompe de charge d'eau industrielle (5) en amont de l'échangeur de chaleur (2).
